# EUROPÄISCHE PATENTSCHRIFT

(11) **EP 3 827 166 B1**
(45) Veröffentlichungstag und Bekanntmachung des Hinweises auf die Patenterteilung: **18.06.2025**
(21) Anmeldenummer: 19744696.6
(22) Anmeldetag: 24.07.2019
(51) Int. Cl.: F02M 55/02, F02M 61/16, F16L 41/02, F16L 55/05, F16L 55/027

(54) **ANSCHLUSSSTÜCK FÜR KRAFTSTOFFINJEKTOR EINES VERBRENNUNGSMOTORS**
CONNECTION PIECE FOR A FUEL INJECTOR IN AN INTERNAL COMBUSTION ENGINE
PIÈCE DE RACCORDEMENT POUR UN INJECTEUR DE CARBURANT D'UN MOTEUR À COMBUSTION INTERNE

(30) Priorität: 26.07.2018 DE 102018118120
(43) Veröffentlichungstag der Anmeldung: 02.06.2021
(60) Teilanmeldung: 25174584.0
(73) Patentinhaber: Liebherr-Components Deggendorf GmbH, 94469 Deggendorf (DE)
(72) Erfinder: PIRKL, Richard, 93055 Regensburg (DE); STINGHE, Razvan-Sorin, 94491 Hengersberg (DE); MELDER, Wolfgang, 87730 Bad Grönenbach (DE); HÖLLBACHER, Markus, 5411 Oberalm (AT)
(74) Vertreter: Laufhütte, Dieter
(86) Internationale Anmeldenummer: PCT/EP2019/069951
(87) Internationale Veröffentlichungsnummer: WO 2020/020961

(56) Entgegenhaltungen:
- DE-A1- 10 101 476
- DE-A1- 102008 001 743
- DE-A1- 102009 055 129
- DE-A1- 102017 201 262
- US-A1- 2010 013 219

## Beschreibung

Die Erfindung betrifft ein Anschlussstück für einen Kraftstoffinjektor eines Verbrennungsmotors. Solche Anschlussstücke sehen wenigstens einen Hochdruckeingangsanschluss und wenigstens einen Hochdruckausgangsanschluss vor.

Bei bekannten Einspritzsystemen für Verbrennungsmotoren, insbesondere der Common-Rail Einspritzung, wird der Kraftstoff durch eine zentrale Hochdruckpumpe auf das benötigte Druckniveau gebracht. Der unter Druck stehende Kraftstoff wird über ein gemeinsames Rohrleitungssystem zu den einzelnen Kraftstoffinjektoren verteilt.

Hierbei kristallisieren sich zwei Möglichkeiten zur Kraftstoffverteilung heraus, nämlich ein Rohrleitungssystem mit Parallel- oder Reihenschaltung der einzelnen Injektoren. Bei erster Variante werden die einzelnen Injektoren an ein gemeinsames Verteilrohr der Hochdruckleitung parallel angeschlossen. Die zweite Variante sieht eine Zuführung des Kraftstoffes von einer Hochdruckpumpe zu einem ersten Injektor vor, von dem der Kraftstoff an den nachfolgenden Injektor weitergeleitet wird. Für eine solche Verschaltung muss jeder Injektor mindestens zwei Hochdruckanschlüsse aufweisen, von denen einer als Eingang und einer als Ausgang genutzt wird.

Ein generelles Problem solcher Common-Rail Einspritzsysteme, insbesondere bei Serienschaltungen, besteht darin, dass sich durch die Hochdruckpumpe erzeugte Druckwellen über die Kraftstoffleitungen in die Injektoren ausbreiten können und einen dort gewünschten, gleichmäßigen Kraftstofffluss beeinträchtigen. Es ist daher wünschenswert, die Ausbreitung der ausgelösten Druckpulsationen der Hochdruckpumpe durch geeignete Maßnahmen zu eliminieren bzw. zumindest zu dämpfen.

Diese Aufgabe wird durch ein Anschlussstück für einen Kraftstoffinjektor eines Verbrennungsmotors gemäß den Merkmalen des Anspruchs 1 gelöst. Vorteilhafte Ausgestaltungen des Anschlussstückes sind Gegenstand der abhängigen Ansprüche.

Das gattungsgemäße Anschlussstück ist aufgrund der wenigstens zwei Hochdruckanschlüsse zum Aufbau einer Reihenschaltung aus einer Vielzahl von Kraftstoffinjektoren geeignet. Hierbei dient ein Anschluss als Hochdruckeingangsanschluss sowie wenigstens ein zweiter Anschluss als Hochdruckausgangsanschluss.

Die DE 101 01 476 A1 zeigt dabei ein Anschlussstück für einen Kraftstoffinjektor eines Verbrennungsmotors, das über einen Hochdruckeingangsanschluss und einen Hochdruckausgangsanschluss verfügt.

Die US 2010/0013219 A1 zeigt ebenfalls ein Anschlussstück, das über einen Hochdruckeingangsanschluss und einen Hochdruckausgangsanschluss verfügt. Über eine Längsbohrung wird hierbei eine Verbindung zu einem an dem Anschlussstück anbringbaren Injektor hergestellt.

Die DE 10 2008 001 743 A1 offenbart eine Kraftstoff Einspritzsystem mit einem Anschlussstück, das dazu ausgelegt ist, Steuer- bzw. Leckagemengen eines Injektors aufzunehmen und an eine gemeinsame Rückführungsleitung der mehreren Injektoren abzugeben. Dokument DE10 2009 055129 A offenbart einen Injektor mit einem Gehäuse.

Erfindungsgemäß wird u.a. vorgeschlagen, für die Hochdruckanschlüsse, d.h. den wenigstens einen Hochdruckeingangsanschluss und den wenigstens einen Hochdruckausgangsanschluss separate Hochdruckkanäle innerhalb des Anschlussstückes vorzusehen, über die die jeweiligen Anschlüsse separiert voneinander innerhalb eines internen Hochdruckspeichers münden. Wesentlicher Punkt ist hierbei, dass die Anschlüsse, d.h. der wenigstens eine Hochdruckeingangsanschluss und der wenigstens eine Hochdruckausgangsanschluss nur mittelbar über den internen Hochdruckspeicher miteinander in fluider Verbindung stehen. Dadurch lassen sich mit Hilfe des internen Hochdruckspeichers etwaige Druckpulsationen innerhalb der Hochdruckleitungen eliminieren bzw. ausreichend dämpfen, sodass eine Weiterleitung dieser Schwankungen von einem ersten Injektor der Reihenschaltung zu wenigstens einem nachgeschalteten Injektor unterbunden bzw. zumindest reduziert wird.

Es ist zwar vorteilhaft, wenn der interne Hochdruckspeicher Bestandteil des Anschlussstückes ist oder zumindest teilweise innerhalb des Anschlussstückes ausgeformt ist. Alternativ könnte jedoch auch ein bestehender Hochdruckspeicher innerhalb eines verbundenen Injektors genutzt werden, in den die Hochdruckkanäle des Anschlussstückes separat voneinander münden. Hierzu sind die Hochdruckkanäle folglich getrennt voneinander zur Schnittstelle des Anschlussstückes mit dem Injektor geführt, wo sie dann getrennt voneinander im internen Hochdruckspeicher des Injektors münden.

Gemäß der Erfindung ist in dem Hochdruckzuleitungskanal vom Hochdruckeingangsanschluss bis zum internen Hochdruckspeicher zusätzlich eine Drossel installiert. Gleiches kann ebenso im Hochdruckzuleitungskanal vom Hochdruckausgangsanschluss zum Hochdruckspeicher vorgesehen sein. Vorstellbar ist also eine Variante, bei der lediglich in einem der beiden Hochdruckzuleitungskanäle eine Drossel vorgesehen ist, bevorzugt ist jedoch eine Ausführung mit integrierter Drossel in beiden Hochdruckzuleitungskanälen.

Durch Verwendung wenigstens einer Drossel innerhalb wenigstens eines dieser Hochdruckzuleitungskanäle können die bereits angesprochenen Druckpulsationen innerhalb der Hochdruckleitungen noch stärker gedämpft werden. Eine solche Drossel kann durch eine definierte Durchmesserverjüngung des jeweiligen Hochdruckzuleitungskanals umgesetzt sein. Zweckmäßig ist eine Verjüngung des Durchmessers in Richtung des Hochdruckspeichers.

Die konstruktive Ausgestaltung des Anschlussstückes bzw. die konkrete Formgebung ist grundsätzlich nicht beschränkt. Als vorteilhaft erweist sich jedoch eine symmetrische, insbesondere axialsymmetrische Ausführung des Anschlussstückes. Denkbar ist die Ausgestaltung als T-förmiges Anschlussstück bzw. T-Stück, wobei der Hochdruckeingangs- als auch der Hochdruckausgangsanschluss am Kopfbereich des T-Stückes ausgeformt sind. Der Fuß des T-förmigen Anschlussstückes bildet die Schnittstelle zum Injektor.

Der interne Hochdruckspeicher kann innerhalb des T-Stückes als Längsbohrung in Richtung des Fußes des T-Stückes ausgeformt sein. Idealerweise münden die Hochdruckzuleitungskanäle im rechten Winkel zur Längsachse der Bohrung des Hochdruckspeichers.

Der Anschluss externer Hochdruckleitungen an den Hochdruckeingangs- bzw. Hochdruckausgangsanschluss kann lösbar erfolgen. Idealerweise umfasst der Hochdruckeingangs- und/oder der Hochdruckausgangsanschluss ein Gewinde zur Verschraubung einer externen Hochdruckleitung. Besonders bevorzugt handelt es sich hierbei um ein Außengewinde, das außen am Anschluss des Hochdruckeingangs- bzw. Hochdruckausgangsanschlusses vorgesehen ist.

Die Montage des Anschlussstückes mit dem Injektor kann ebenfalls mittels lösbarer Verbindung erfolgen. Auch hierbei erweist sich eine Verschraubung von Anschlussstück und Injektorgehäuse als vorteilhaft, insbesondere mittels ein oder mehrerer Spannmuttern. Es wird darauf hingewiesen, dass das Anschlussstück nicht notwendigerweise ein vom Injektor bzw. Injektorgehäuse separierbares Bauteil sein muss. Denkbar ist es weiter, dass das Anschlussstück Bestandteil des Injektorgehäuses ist, d.h. durch einen Abschnitt des Injektors/Injektorgehäuses gebildet wird. Theoretisch ist auch vorstellbar, dass Injektor/Injektorgehäuse und Anschlussstück aus einem einteiligen Basisbauteil gebildet sind. Bei der vorhergehenden angesprochenen Schnittstelle handelt es sich dann nur um eine theoretische Schnittstelle zwischen den beiden Bereichen des einheitlichen Bauteils.

Ferner kann vorgesehen sein, dass das Anschlussstück wenigstens einen internen Filter vorsieht, der die fluide Verbindung zwischen internem Hochdruckspeicher des Anschlussstückes und dem das Anschlussstück aufnehmenden Injektor bildet. Gemäß bevorzugter Ausführungsform ist dazu ein entsprechendes Filtergehäuse vorgesehen, das zur Aufnahme des Filters dient, wobei das Filtergehäuse die entsprechende Anschlussschnittstelle des internen Hochdruckspeichers mit einem Injektor bildet.

Neben dem erfindungsgemäßen Anschlussstück betrifft die vorliegende Erfindung zudem einen Kraftstoffinjektor mit wenigstens einem Anschlussstück gemäß der vorliegenden Erfindung. Demzufolge ergeben sich für den Kraftstoffinjektor dieselben Vorteile und Eigenschaften, wie sie bereits vorstehend anhand des Anschlussstückes erläutert wurden. Insbesondere umfasst ein entsprechender Injektor auch eine solche Ausführungsform, bei dem der interne Hochdruckspeicher zur Verbindung des Hochdruckeingangs- und/oder Hochdruckausgangsanschlusses teilweise bzw. vollständig innerhalb des Kraftstoffinjektorgehäuses integriert ist. In einem solchen Fall enden die Hochdruckzuleitungskanäle des Anschlussstückes separat voneinander an der Schnittstelle zum Injektor. Der Injektor weist in seinem korrespondierenden Schnittstellenbereich weiterführende Kanäle auf, wodurch die Hochdruckzuleitungskanäle letztendlich separiert voneinander im internen Hochdruckspeicher des Injektors münden können.

Zudem betrifft die Erfindung ebenfalls ein Einspritzsystem mit mehreren Injektoren gemäß der vorliegenden Erfindung, wobei diese über ihre Anschlussstücke in Reihe miteinander verschaltet sind.

Zuletzt betrifft die Erfindung ebenfalls eine Arbeitsmaschine mit einem Verbrennungsmotor und einem Einspritzsystem gemäß der vorliegenden Erfindung. Demzufolge ergeben sich für das Einspritzsystem als auch für die Arbeitsmaschine dieselben Vorteile und Eigenschaften, wie sie bereits im Rahmen der Erläuterungen zum erfindungsgemäßen Anschlussstück aufgezeigt wurden.

Weitere Vorteile und Eigenschaften der Erfindung sollen anhand der in den Figuren dargestellten Ausführungsbeispiele näher erläutert werden. Es zeigen:
- Figur 1:: eine Schnittdarstellung durch den erfindungsgemäßen Kraftstoffinjektor im Bereich des Anschlussstückes gemäß einer ersten Ausführungsform,
- Figur 2:: eine zur Figur 1 analoge Schnittdarstellung eines Kraftstoffinjektors aber nicht unter den Wortlaut der Ansprüche fallend, und
- Figur 3:: eine skizzenhafte Darstellung des erfindungsgemäßen Einspritzsystems mit Kraftstoffinjektoren gemäß Figur 1 oder Figur 2.

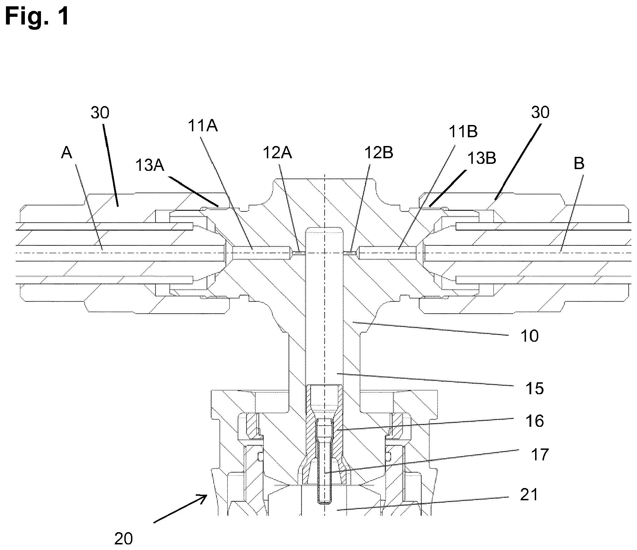

Die Schnittdarstellung der Figur 1 zeigt das axialsymmetrisch ausgeführte, T-förmige Anschlussstück 10, das mittels Verschraubung fußseitig mit dem Injektorgehäuse 20 verbunden ist. Am Kopfbereich des Anschlussstückes 10 sind auf gegenüberliegenden Seiten die Anschlüsse für Hochdruckleitungen A, B ausgeformt. Beispielsweise wird die Hochdruckleitung A mit dem Hochdruckeingangsanschluss verbunden, indem die Überwurfmutter 30 mit dem am Anschlussflansch vorgesehenen Außengewinde 13A verschraubt wird. Dadurch wird die Hochdruckleitung A axial in die Öffnung des Hochdruckeingangsanschlusses gepresst. Selbiges erfolgt mit der Hochdruckleitung B, die ebenfalls mittels einer Überwurfmutter 30 mit dem am Hochdruckausgangsanschluss vorgesehenen Außengewinde 13B verschraubt wird. Mit Hilfe solcher Anschlussstücke 10 kann demzufolge eine Reihenschaltung von Injektoren 20 für ein Einspritzsystem eines Verbrennungsmotors aufgebaut werden, ohne dass zusätzliche Verbindungsbauteile, wie z.B. eine Schelle oder ähnliches, notwendig sind.

Von beiden Hochdruckanschlüssen erstreckt sich jeweils ein individueller Hochdruckzuleitungskanal 11A, 11B, der in axialer Anschlussrichtung vom Hochdruckeingangs- bzw. Hochdruckausgangsanschluss bis zu einem internen Hochdruckspeicher 15 verläuft und in diesem mündet. Der Hochdruckspeicher 15 erstreckt sich quer zur Richtung der Zuleitungskanäle 11A, 11B, d.h. in Vertikalrichtung bis zum Fuß des Anschlussstückes 10.

Sowohl der Hochdruckzuleitungskanal 11A als auch der Hochdruckzuleitungskanal 11B sehen jeweils eine integrierte Drossel 12A, 12B vor, die sich durch eine Verjüngung des Kanaldurchmessers des jeweiligen Hochdruckzuleitungskanals 11A, 11B in Richtung des integrierten Hochdruckspeichers 15 auszeichnet. In der gezeigten Ausführungsform münden beide Drosseln 12A, 12B direkt im integrierten Druckspeicher 15, theoretisch könnten die Drosseln 12A, 12B jedoch in einem weiter mittig gelegenen Abschnitt des Hochdruckzuführungskanals 11A, 11B liegen.

Dadurch, dass die Hochdruckleitung A mit der ausgehenden Hochdruckleitung B lediglich mittelbar über den integrierten Hochdruckspeicher 15 verbunden ist, wird sichergestellt, dass die von einer zentralen Hochdruckpumpe verursachten Druckschwingungen eliminiert bzw. zumindest massiv gedämpft werden und nicht über den Hochdruckkanal 11B bzw. die Hochdruckleitung B zu einem weiteren angeschlossenen Injektor übertragen werden können. Die integrierten Drosseln 12A, 12B tragen zu einer weiteren Eliminierung bzw. Dämpfung der durch die Pumpe verursachten Druckwellen bei.

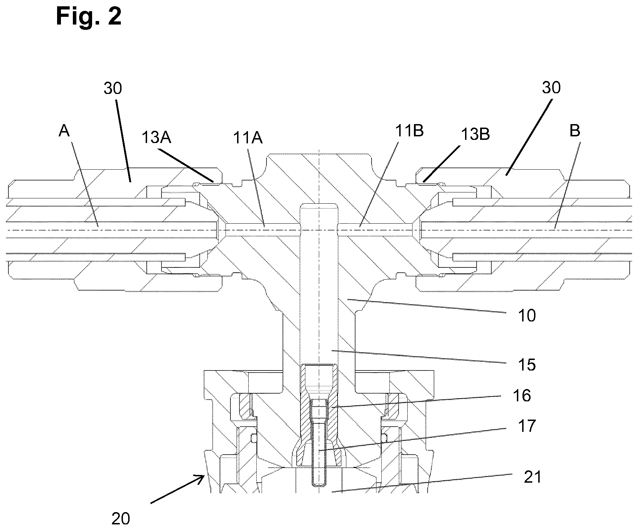

Die Ausführungsform der Figur 2 zeigt eine leicht modifizierte Variante des Anschlussstückes 10, die sich gegenüber der Variante der Figur 1 lediglich darin unterscheidet, dass die in Figur 1 enthaltenen Drosseln 12A, 12B weggelassen wurden, der Durchmesser der Hochdruckzuführungskanäle 11A, 11B also über seine Länge konstant bleibt. Einzig der Druckspeicher 15 sorgt in diesem Fall für eine ausreichende Eliminierung bzw. Dämpfung etwaiger Druckpulsationen in der Hochdruckleitung A.

Bei beiden Ausführungsbeispielen (Figur 1 und 2) wird die fluide Schnittstelle des Anschlussstückes 10 mit dem Injektor 20 über den integrierten Filter 17 gebildet, der durch ein Filtergehäuse 16 aufgenommen ist. Das Filtergehäuse 16 ist in die zur Schnittstelle gerichtete Öffnung des Hochdruckspeichers 15 eingesetzt. Das Filtergehäuse 16 schließt bündig mit der Öffnung des Hochdruckspeichers 15 ab, während das Filterelement 17 um ein kurzes Stück aus der Öffnung herausragt.

Der Hochdruckspeicher 21 des Injektors zeigt einen unterschiedlichen Durchmesser zum Hochdruckspeicher 15 des Anschlussstückes 10, zumindest mit Bezug zu dessen Öffnungsdurchmesser. Anschlussstück 10 und Injektor 20 sind dabei so miteinander verbunden, dass die beiden Hochdruckspeicher 15, 21 bzw. deren Öffnungen passgenau miteinander abschließen. Das herausragende Filterelement 17 des Anschlussstückes 10 ragt in den Hochdruckspeicher 21 des Injektors hinein.

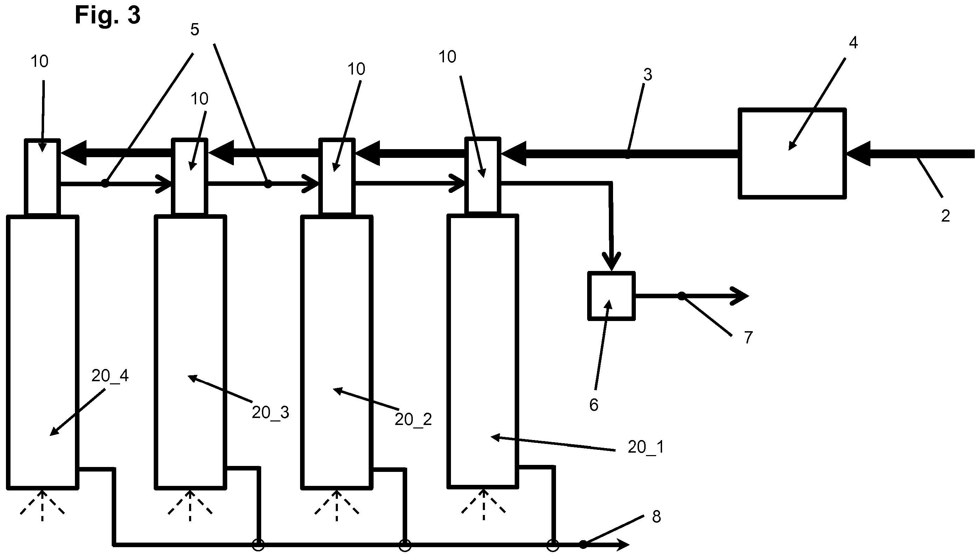

Figur 3 zeigt einen skizzierten Schaltungsaufbau des erfindungsgemäßen Einspritzsystems mit insgesamt vier Kraftstoffinjektoren 20_1, 20_2, 20_3, 20_4, die jeweils das erfindungsgemäße Anschlussstück 10 am kopfseitigen Gehäuseende tragen. Die zentrale Kraftstoffzufuhr ist mit dem Bezugszeichen 2 gekennzeichnet. Der Kraftstoff wird mittels der zentralen Hochdruckpumpe 4 auf das benötigte Druckniveau gebracht, das über die Kraftstoffzuleitung 3 dem ersten Injektor 20_1 der Reihenschaltung bereitgestellt wird. Die Zuleitung 3 wird hierzu am Hochdruckeingangsanschluss des Anschlussstücks 10 des ersten Injektors 20_1 montiert. Über den Hochdruckausgangsanschluss des Anschlussstückes 10 gelangt der Kraftstoff dann weiter zum nachfolgenden Injektor 20_2 bzw. den dortigen Hochdruckeingangsanschluss des zugeordneten Anschlussstückes 10. Der Ausgang des Injektors 20_2 ist wiederum mit dem Eingang des nachfolgenden Injektors 20_3 verbunden, von dort aus der Kraftstoff letztendlich zum letzten Injektor 20_4 gelangt. Der Hochdruckausganganschluss des vierten und damit letzten Kraftstoffinjektors 20_4 ist mit einem passenden Verschlussstopfen dichtend verschlossen.

Optional kann eine weitere Kraftstoffabführung 5 im Bereich der Anschlussstücke 10 vorgesehen sein, über diese Bruchleckagen in den Kraftstofftank 7 zurückgeführt werden können. Ein entsprechender Sensor 6 dient zur Detektion von etwaigen Bruchleckagen. Weiterhin sorgt die Kraftstoffabführung 8 für die Abführung von etwaigen Schaltleckagen aus den Injektoren 20_1-20_4.

## Patentansprüche

1. Anschlussstück (10) für einen Kraftstoffinjektor (20) eines Verbrennungsmotors mit
einem Hochdruckeingangsanschluss und
einem Hochdruckausgangsanschluss, wobei
der Hochdruckeingangsanschluss und der Hochdruckausgangsanschluss über getrennte Hochdruckzuleitungskanäle (11A, 11B) in einem internen Hochdruckspeicher (15) des Anschlussstückes (10) und/oder des Injektors (20) münden,
**dadurch gekennzeichnet, dass**
der Hochdruckzuleitungskanal (11A) des Hochdruckeingangsanschlusses und der Hochdruckzuleitungskanal (11B) des Hochdruckausgangsanschlusses eine Drossel (12A, 12B) aufweisen,
das Anschlussstück (10) T-förmig bzw. als T-Stück ausgestaltet ist,
die Hochdruckanschlüsse im Kopfbereich und die Schnittstelle zu einem Kraftstoffinjektorgehäuse (20) durch den Fuß des T-Stückes gebildet ist, und
der Hochdruckeingangsanschluss und/oder der Hochdruckausgangsanschluss ein außen am Anschlussflansch des Hochdruckeingangs- oder Hochdruckausgangsanschlusses vorgesehenes Außengewinde (13A, 13B) zur Verschraubung mit einer externen Hochdruckleitung (A, B) aufweist.

2. Anschlussstück (10) nach Anspruch 1, **dadurch gekennzeichnet, dass** die Drossel (12A, 12B) durch eine definierte Durchmesserverjüngung des jeweiligen Hochdruckzuleitungskanals (11A, 11B) gebildet ist.

3. Anschlussstück (10) nach einem der vorhergehenden Ansprüche, **dadurch gekennzeichnet, dass** das Anschlussstück (10) axialsymmetrisch ausgeführt ist.

4. Anschlussstück (10) nach einem der vorhergehenden Ansprüche, **dadurch gekennzeichnet, dass** sich der interne Hochdruckspeicher (15) des Anschlussstückes (10) vorteilhafterweise in Axialrichtung zur Schnittstelle des T-Stückes erstreckt und die Hochdruckzuleitungskanäle (11A, 11B) idealerweise im rechten Winkel zur Längserstreckung des Hochdruckspeichers (15) in diesem münden.

5. Anschlussstück (10) nach einem der vorhergehenden Ansprüche, **dadurch gekennzeichnet, dass** ein Filtergehäuse (16) mit aufgenommenem Filter (17) vorgesehen ist, wobei das Filtergehäuse (16) bzw. der Filter (17) die Anschlussschnittstelle des internen Hochdruckspeichers (15) mit einem Kraftstoffinjektor (20) bildet, insbesondere mit einem integrierten Hochdruckspeicher (15) des Kraftstoffinjektors (20).

6. Kraftstoffinjektor (20) mit wenigstens einem Anschlussstück (10) nach einem der vorhergehenden Ansprüche.

7. Einspritzsystem mit mehreren Injektoren gemäß Anspruch 6, die über ihre Anschlussstücke (10) in Reihe geschaltet sind.

8. Arbeitsmaschine mit einem Verbrennungsmotor und Einspritzsystem nach Anspruch 7.

## Claims

1. Connecting piece (10) for a fuel injector (20) of an internal combustion engine comprising
a high-pressure input port, and
a high-pressure output port, wherein
the high-pressure input port and the high-pressure output port open into an internal high-pressure accumulator (15) of the connecting piece (10) and/or the injector (20) via separate high-pressure feed channels (11A, 11B),
**characterized in that**
the high-pressure feed channel (11A) of the high-pressure input port and the high-pressure feed channel (11B) of the high-pressure output port comprise a throttle (12A, 12B),
the connecting piece (10) is designed T-shaped or as a T-piece,
the high-pressure ports are formed in the head area and the interface to a fuel injector housing (20) is formed by the foot of the T-piece, and
the high-pressure input port and/or the high-pressure output port comprise an external thread (13A, 13B) which is provided on the outside of the connecting flange of the high-pressure input port or high-pressure output port for the screw connection of an external high-pressure line (A, B).

2. Connecting piece (10) according to claim 1, **characterized in that** the throttle (12A, 12B) is formed by a defined diameter taper of the respective high-pressure feed channel (11A, 11B).

3. Connecting piece (10) according to any one of the preceding claims, **characterized in that** the connecting piece (10) is of axially symmetrical design.

4. Connecting piece (10) according to any one of the preceding claims, **characterized in that** the internal high-pressure accumulator (15) of the connecting piece (10) advantageously extends in the axial direction to the interface of the T-piece, and the high-pressure feed channels (11A, 11B) ideally open into the high-pressure accumulator (15) at right angles to its longitudinal extension.

5. Connecting piece (10) according to any one of the preceding claims, **characterized in that** there is provided a filter housing (16) with a filter (17) received therein, wherein the filter housing (16) or the filter (17) forms the connection interface of the internal high-pressure accumulator (15) with a fuel injector (20), in particular with an integrated high-pressure accumulator (15) of the fuel injector (20).

6. Fuel injector (20), comprising at least one connecting piece (10) according to any one of the preceding claims.

7. Injection system, comprising a plurality of injectors according to claim 6, which are connected in series via their connecting pieces (10).

8. Machine, comprising an internal combustion engine and an injection system according to claim 7.

## Revendications

1. Pièce de raccordement (10) pour un injecteur de carburant (20) d'un moteur à combustion interne avec
un raccordement d'entrée haute pression et
un raccordement de sortie haute pression, dans laquelle
le raccordement d'entrée haute pression et le raccordement de sortie haute pression débouchent dans un accumulateur haute pression interne (15) de la pièce de raccordement (10) et/ou de l'injecteur (20) par l'intermédiaire de canaux d'arrivée haute pression (11A, 11B) séparés,
**caractérisée en ce que**
le canal d'arrivée haute pression (11A) du raccordement d'entrée haute pression et le canal d'arrivée haute pression (11B) du raccordement de sortie haute pression présentent un papillon (12A, 12B),
la pièce de raccordement (10) est configurée en forme de T ou en tant que pièce en T,
les raccordements haute pression dans la zone de tête et l'interface avec un boîtier d'injecteur de carburant (20) sont formés par la base de la pièce en T, et le raccordement d'entrée haute pression et/ou le raccordement de sortie haute pression présentent un filetage extérieur (13A, 13B) prévu à l'extérieur sur la bride de raccordement du raccordement d'entrée haute pression ou du raccordement de sortie haute pression, destiné à être vissé à un conduit haute pression externe (A, B).

2. Pièce de raccordement (10) selon la revendication 1, **caractérisée en ce que** le papillon (12A, 12B) est formé par un rétrécissement de diamètre défini du canal d'arrivée haute pression (11A, 11B) respectif.

3. Pièce de raccordement (10) selon l'une quelconque des revendications précédentes, **caractérisée en ce que** la pièce de raccordement (10) est réalisée de manière symétrique axialement.

4. Pièce de raccordement (10) selon l'une quelconque des revendications précédentes, **caractérisée en ce que** l'accumulateur haute pression interne (15) de la pièce de raccordement (10) s'étend avantageusement dans la direction axiale vers l'interface de la pièce en T et les canaux d'arrivée haute pression (11A, 11B) débouchent dans l'accumulateur haute pression (15) idéalement à angle droit par rapport à l'extension longitudinale de celui-ci.

5. Pièce de raccordement (10) selon l'une quelconque des revendications précédentes, **caractérisée en ce qu'**un boîtier de filtre (16) est prévu avec un filtre (17) logé, dans laquelle le boîtier de filtre (16) ou le filtre (17) forme l'interface de raccordement de l'accumulateur haute pression interne (15) avec un injecteur de carburant (20), en particulier avec un accumulateur haute pression (15) intégré de l'injecteur de carburant (20).

6. Injecteur de carburant (20) avec au moins une pièce de raccordement (10) selon l'une quelconque des revendications précédentes.

7. Système d'injection avec plusieurs injecteurs selon la revendication 6, qui sont branchés en série par l'intermédiaire de leurs pièces de raccordement (10).

8. Engin de travail avec un moteur à combustion interne et un système d'injection selon la revendication 7.
